# EUROPÄISCHE PATENTSCHRIFT

(11) **EP 1 044 759 B1**
(45) Veröffentlichungstag und Bekanntmachung des Hinweises auf die Patenterteilung: **30.06.2004**
(21) Anmeldenummer: 00108334.4
(22) Anmeldetag: 14.04.2000
(51) Int. Cl.: B23Q 3/12, B23Q 3/155, B23Q 3/18, B23Q 7/04

(54) **Handhabungswerkzeug für eine Werkzeugmaschine**
Handling tool for a machine tool
Outil de maniement pour une machine-outil

(30) Priorität: 14.04.1999 DE 19916765
(43) Veröffentlichungstag der Anmeldung: 18.10.2000
(73) Patentinhaber: NC-Automation GmbH, 87437 Kempten (DE)
(72) Erfinder: Breg, Michael, 87435 Kempten (DE); Bauch, Karl, 87437 Kempten (DE)
(74) Vertreter: Fiener, Josef

(56) Entgegenhaltungen:
- DE-A- 3 544 173
- DE-A- 19 523 787

## Beschreibung

Die Erfindung betrifft ein Handhabungswerkzeug für eine Werkzeugmaschine, insbesondere für eine NC-Fräsmaschine oder ein Bearbeitungszentrum, mit einem Werkzeugspeicher, aus dem das mit Greifelementen versehene Handhabungswerkzeug aus einer Magazinstellung in eine Bearbeitungsspindel der Werkzeugmaschine zum Aufnehmen, Halten und/oder Ausrichten eines Werkstückes einsetzbar ist.

Die Handhabung von Werkstücken, wie sie zur Optimierung und Automatisierung des Produktionsprozesses angestrebt wird, beinhaltet nicht nur den Transport der Werkstücke zu oder von der Bearbeitungsposition, sondern auch das Umspannen oder Ausrichten von einer Spannvorrichtung in eine andere, sowie das Wenden und Drehen der Werkstücke, um hier eine allseitige Bearbeitung durchführen zu können. Diese Handhabung der Werkstücke an Fräsmaschinen oder Bearbeitungszentren wird in der Regel durch Roboter mit gesonderten Steuerungen, Antrieben und mehreren Bewegungsachsen verwirklicht. Neben dem erhöhten Investitionsbedarf aufgrund des Bauaufwandes für das Handhabungsgerät und die Verknüpfung der beiden Steuerungen wirken sich auch der große Platzbedarf der Roboters und die schlechte Zugänglichkeit zur Werkzeugmaschine nachteilig aus.

Um diesen wesentlichen Nachteilen abzuhelfen, wurde vom Erfinder in der DE 195 23 787 A1, insbesondere Fig. 7, ein Greifer bzw. Handhabungswerkzeug mit den oberbegrifflichen Merkmalen des Anspruches 1 vorgeschlagen. Hierbei sind die Greifelemente jeweils um eine Schwenkachse schwenkbar, so daß das Handhabungswerkzeug einen entsprechend geringeren Durchmesser in der Magazinstellung einnimmt. Diese Schwenkbewegung der Greiferträger kann hierbei durch eine Feder oder ein Betätigungselement in Form einer durch die Bearbeitungsspindel verlaufenden Druckstange, erfolgen. Eine derartige Druckstange kann jedoch der üblicherweise vorhandenen Spannstange in der Bearbeitungsspindel hinderlich sein. Zudem müßte eine derartige Druckstange in manchen Bearbeitungsspindeln nachgerüstet werden, so daß die universelle Anwendbarkeit dieses Greifers bzw. Handhabungswerkzeuges eingeschränkt ist, während bei dem Einsatz einer Feder, insbesondere einer Rückstellfeder, für die Greiferträger die Aufspreizbewegung dieses Klappgreifers nicht oder nur ungenau gesteuert werden kann, insbesondere die Arbeits- oder Bereitschaftsposition bei schweren Greifelementen nicht beibehalten werden kann.

Weiterhin ist aus der DE-OS 35 44 173 ein Handhabungswerkzeug für Werkzeugmaschinen bekannt, wobei der darin beschriebene Wendezusatz für automatische Werkzeugmaschinen aufgrund des vorgesehenen Winkelgetriebes sehr bau- und platzaufwendig ist. Zudem sind die Greiferträger hierbei durch zwei Bolzen gebildet, so daß am Werkstück hierzu entsprechende Bohrungen vorgesehen sein müssen sowie eine sehr genaue Ansteuerung der Koordinaten zum Einführen der Bolzen erforderlich ist. Dadurch wird dieser Wendezusatz für Werkzeugmaschinen relativ unflexibel, zumal aufgrund der ausladenden Bauweise Probleme beim Wechselvorgang zu erwarten sind. Zudem ist die Speicherung in dem Werkzeugmagazin aufgrund der ausladenden Bauweise des Handhabungswerkzeuges, inbesondere der großen Baulänge problematisch, zumal auch ein relativ großer Durchmesser eingenommen wird, so daß übermäßig große Abstände im Werkzeugmagazin erforderlich sind.

In der Fachzeitschrift "Werkstatt und Betrieb" 1994, Heft 12, Seite 934/35 wird ebenfalls ein Handhabungswerkzeug für Werkzeugmaschinen gemäß den oberbegrifflichen Merkmalen beschrieben, wobei ein einwechselbares Greifzeug zum Einsatz kommt, das seinen Werkzeugplatz im Werkzeugmagazin in Reichweite des Werkzeugswechslers hat. Nach der dortigen Beschreibung befindet sich dieses Handhabungswerkzeug (Greifer) immer an dem gleichen Werkzeugplatz des Werkzeugmagazins und bleibt beim Einwechseln über zwei flexible Schläuche mit der Energieversorgung verbunden. Die Greiferfinger können dabei in Anpassung an verschiedene Werkstückformen ausgewechselt werden. Dieser in die Hauptspindel der Werkzeugmaschine einwechselbare Werkstückgreifer besitzt ebenfalls eine erhebliche Baulänge und Auskragung, so daß in der "Parkstellung" im Werkzeugmagazin ein erheblicher Speicherplatz eingenommen wird. Zudem ist die Fluidversorgung über flexible Schläuche nachteilig, da hierdurch ein Schwenken um die Achse des Handhabungswerkzeuges nur in einem begrenzten Winkelbereich möglich ist. Eine mehrmalige Drehung des Handhabungswerkzeuges durch Rotation der Haupt- oder Bearbeitungsspindel ist hierdurch ausgeschlossen. Zudem ist die Verbindung beim Werkzeugwechsel selbst hinderlich, da hierdurch Kollisionen auftreten können.

Demzufolge liegt der Erfindung die Aufgabe zugrunde, ein Handhabungswerkzeug für Werkzeugmaschinen zu schaffen, das eine besonders kompakte Bauweise und einen einfachen, sicheren Greifund Wechselvorgang, insbesondere die Beibehaltung der Arbeitsposition auch bei schweren Greifelementen erlaubt, wobei der Greifbereich erheblich größer sein soll als die Außenabmessungen in Magazin- bzw. Parkstellung.

Diese Aufgabe wird gelöst durch ein Handhabungswerkzeug gemäß den Merkmalen des Patentanspruches 1.

Durch die vorgeschlagene spreizbare Ausführung der Greiferträger mit stellungsdefinierter, insbesondere formschlüssig verriegelter Zwischenposition wird selbst bei relativ langen oder schweren Greiferträgern diese aufgespreizte Stellung beibehalten, so daß auch Werkzeuge für große Werkstücke in der Maschine verwendet werden können und dennoch im Werkzeugmagazin Platz finden, also der benötigte Speicherplatzbedarf im Magazin insgesamt reduziert wird. Zudem wird dadurch bei besonders kompakter Bauweise ein sicherer Greifvorgang des Werkstückes und Einwechselvorgang des Handhabungswerkzeuges erreicht. Damit ist dieses kompakte Handhabungswerkzeug einfach und sicher einwechselbar, so daß sich insgesamt eine vereinfachte Betriebsweise ergibt.

In bevorzugter Ausführung ist der Kolben zur Betätigung der Greiferträger hülsenförmig ausgebildet, wobei in seinem Zentrum eine Doppelkeilfläche oder Innenkegelfläche ausgebildet ist. Hierdurch wird eine weitere Verkürzung der axialen Baulänge erreicht, da beim Axialhub des Kolbens zur radialen Spreizbewegung nach innen oder nach außen keine zusätzliche Baulänge beansprucht wird. Dabei können die Greiferträger sowohl zum Außen- als auch zum Innenspannen verwendet werden.

Weitere vorteilhafte Ausgestaltungen sind Gegenstand der Unteransprüche.

Nachfolgend werden mehrere Ausführungsbeispiele des Handhabungswerkzeuges anhand der Zeichnung näher beschrieben und erläutert. Hierbei zeigen:
- Fig. 1: einen Längsschnitt durch ein Handhabungswerkzeug (Greifer) in Magazinstellung;
- Fig. 2: das Handhabungswerkzeug gemäß Fig. 1 in der Arbeitsposition;
- Fig. 3, 3A: eine abgewandelte Ausführungsform eines Handhabungswerkzeugs mit geschlossenen Greiferträgern (Magazinstellung), wobei lediglich ein an dem Werkzeugkegel ankoppelbarer, auf- und zusammenfaltbarer Aufsatz dargestellt ist; und
- Fig. 4, 4A: den Handhabungswerkzeug-Aufsatz gemäß Fig. 3, 3A in Greifstellung bzw. Zwischenposition;

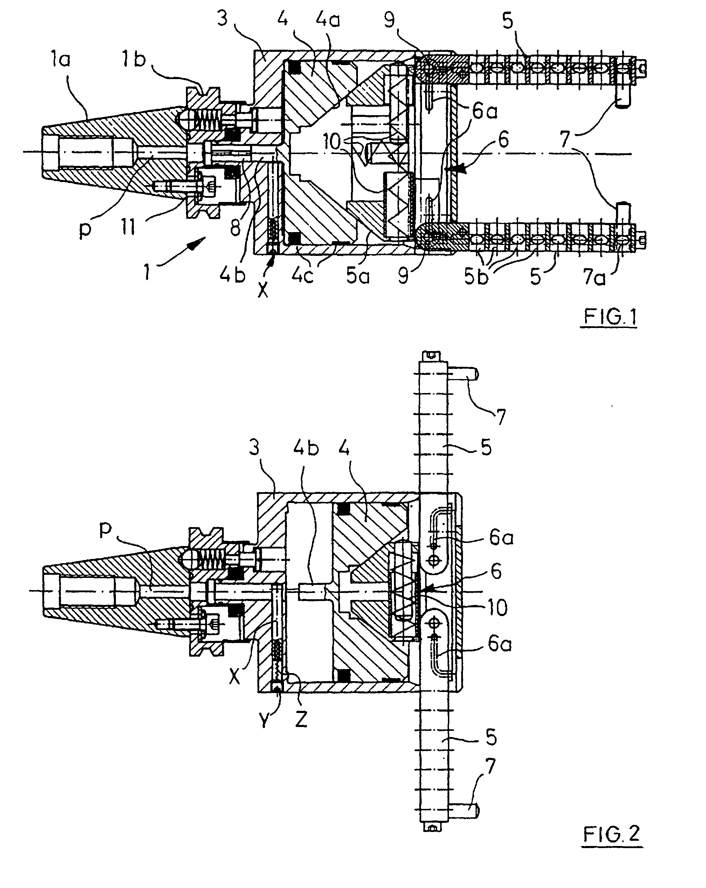

In Fig. 1 ist ein Handhabungswerkzeug 1 dargestellt, das von einer Magazinstellung aus mit seinem Aufnahmekegel 1a in eine komplementär ausgebildete Kegelaufnahme einer Bearbeitungsspindel einer nicht näher dargestellten Werkzeugmaschine einsetzbar ist. Die Einsetzbewegung vom Magazin aus erfolgt hierbei mittels der Bearbeitungsspindel selbst oder eines nicht näher dargestellten Werkzeugwechslers, der im Griffbereich 1b des Handhabungswerkzeuges 1 angreift oder durch das Anfahren der Magazinposition durch die Spindel selbst. Der Griffbereich 1b ist hierbei in üblicher Weise in Form einer umlaufenden Rille ausgebildet, die für derartige wechselbare Werkzeuge bzw. Greifer standardisiert ist. An der Spitze des Aufnahmekegels 1a ist zudem eine ebenfalls normierte Anzugsbohrung angeordnet, mit der der Aufnahmekegel 1a mittels eines Anzugsbolzens in der Bearbeitungsspindel im allgemeinen hydraulisch gespannt wird.

Zwischen dem Griffbereich 1b und einem zylinderischen Gehäuse 3 des Handhabungswerkzeuges 1, in dessen Zentrum ein Kolben 4 axialbeweglich angeordnet ist, ist hierbei ein schematisch angedeutetes Ausgleichselement 11 vorgesehen, das zumindest eine axiale Ausgleichsbewegung mit automatischer Rückstellung zuläßt, vorzugsweise auch einen radialen und rotatorischen Ausgleich. Der Kolben 4 ist dabei mittels Dichtungen 4c abgedichtet und weist zur Spindelseite hin einen Bolzenfortsatz 4b auf, der in den Strömungsweg einer Fluidzuführung p hineinragt und als Drossel dient. Die Fluidzuführung p erfolgt hierbei bevorzugt durch eine zentrale Bohrung in der hohl ausgebildeten Bearbeitungsspindel. Zur Betätigung des Kolbens 4 wird bevorzugt Druckluft verwendet. Die Fluidzuführung erfolgt über eine Drossel 8, wodurch die Bewegungsgeschwindigkeit des Kolbens 4 eingestellt werden kann.

Der Kolben 4 weist in bevorzugter Ausführung eine Innenkegelfläche 4a auf, die mit entsprechend ausgebildeten schrägflächen 5a der Greiferbacken 6 zusammenwirkt. Zwei leistenartige Greiferträger 5 sind hierbei mittels der am Gehäuse 3 geführten Backen 6 und darin ausgebildeten, bogenförmigen Führungen 6a in Radialrichtung nach innen oder nach außen spreizbeweglich und um Achsen 9 schwenkbar gelagert. In den leistenförmigen Greiferträgern 5 sind eine Vielzahl von Aufnahmebohrungen 5b zum Einsetzen von Greifeinsätzen 7 je nach gefordertem Greifdurchmesser vorgesehen. Die Greifeinsätze 7 sind hierbei durch einen drehbaren, einseitig abgeflachten, im Greiferträger 5 gelagerten und gesicherten Querbolzen 7a in axialer Richtung positioniert und formschlüssig zur Übertragung von Kräften gesichert. Zur Übertragung großer Kräfte, insbesondere Biegekräfte, befinden sich in den leistenförmigen Greiferträgern 5 vorzugsweise zwei parallele Bohrungsreihen, damit die Bohrungsdurchmesser und damit die Teilung bzw. die erzielbaren Sprünge der einstellbaren Greifabmessung gering gehalten werden.

Der Querbolzen 7a sitzt in diesem Fall zwischen den parallelen Bohrungsreihen vorzugsweise mittig und erlaubt bei einseitiger Abflachung zum einen den Einsatz von Greiferträgern 5, die mit zwei Zylinderstiften zur Kopplung an den Greiferträger versehen sind und zum anderen das Einsetzen einzelner Stifte. Beim Einsetzen von Einzelstiften als Greifeinsatz 7 wird der Querbolzen 7a mit seiner abgeflachten Seite in die Position der Aufnahmebohrung gedreht. Dadurch läßt sich ein erster Stift einschieben. Bei Drehung des Querbolzens um 180° befindet sich die Abflachung im Bereich der zweiten Bohrung, so daß ein zweiter Stift eingesetzt werden kann. Bei Weiterdrehen des Querbolzens um z. B. 90° sind dann beide Stifte an ihren seitlichen Aussparungen gesichert. Beim Entnehmen der Stifte wird analog vorgegangen. Werden Greifer mit zwei fest verbundenen Stiften eingesetzt, so hat einer der beiden Stifte im Bereich des Querstiftes eine Abflachung und der andere eine seitliche Aussparung, in die der Querstift zur Sicherung eingedreht wird. Der Querstift verfügt an der Außenseite über einen Schlitz, Kreuzschlitz oder Sechskant, damit ein handelsübliches Werkzeug zum Drehen angesetzt werden kann und über eine Markierung, die die Stellung der Abflachung anzeigt. Als Sicherung gegen Ausziehen und Verdrehen ist der Querstift tangential mit einem federnden Maschinenelement, wie z. B. einem Schwerspannstift, in Berührung. Damit ist auch eine sichere Halterung in Vertikalspindeln und in vertikaler Magazinstellung bzw. Parkposition möglich, obwohl hier in den Zeichnungen das Handhabungswerkzeug 1 für den Einsatz in Horizontalspindeln dargestellt ist. Der Kolben 4, die Backen 6 und/oder die Greiferträger 5 sind durch Rückstellfedern 10 beaufschlagt, so daß in der hier dargestellten Ausführung das Handhabungswerkzeug 1 (ohne Fluidbeaufschlagung p) in der platzsparenden Magazinstellung gehalten wird. In der dargestellten Park- oder Magazinposition gemäß Fig. 1 befindet sich der im Gehäuse 3 gelagerte Arretierstift X außer Eingriff. Durch die zwischen dem Arretierstift X und dem Bohrungsverschluß Y eingespannte Feder Z ist der Arretierstift X stets bestrebt, sich in radialer Richtung in Richtung der Rotationsachse des Kolbens 4 hinzubewegen. Die Greiferträger 5 werden aufgrund der Rückstellfedern 10 und ihrer Lagerung auch bei Drehbeschleunigung in verschiedenen Richtungen und unterschiedlichen Stellungen in Parkposition festgehalten.

In Fig. 2 ist die Aufspreizstellung des Handhabungswerkzeuges 1 als Zwischenposition dargestellt, wobei durch Fluidzuführung p der Kolben 4 (hier nach rechts) bewegt wird. Sobald das Fluid den Kolben 4 um einige Millimeter nach rechts bewegt hat und damit die Greiferträger 5 ausgeklappt sind, wird der Arretierstift X durch die Feder Z zur Rotationsachse des Werkzeuges hin bewegt, so daß bei späterer Fluidentlastung der Kolben sich nicht mehr bis in die Endposition zurückbewegen kann. Dadurch ist diese Zwischenposition definiert und die Greiferträger 5 bleiben in dieser Arbeitsposition, so daß eine nachfolgende Beaufschlagung mit Druck dann je nach eingesetzten Greifereinsätzen 7 das Greifen von außen oder innen aufgrund der linearen Bewegung der Greiferträger 5 mit den eingesetzten Greifelementen 7 in Richtung der Werkzeugachse oder von ihr weg bewirkt. Dabei gleiten die Schrägflächen 5a der Greiferträger 5 und die zumindest bereichsweise im Inneren des Kolbens 4 ausgebildete Innenkegelfläche 4a aufeinander, so daß die Greiferträger 5 aus der zunächst aufgespreizten Arbeitsposition nur noch radial nach innen in die End- oder Greifposition bewegt werden. Die leistenförmigen Greiferträger 5 sind hierbei im Gehäuse 3 und der Führung 6a exakt in Radialrichtung geführt. Durch den Axialhub des Kolbens 4 von beispielsweise 20 mm wird ein Radialhub der Greiferträger 5 in einer ähnlichen Größenordnung erreicht, wobei der Spreizhub der Greiferträger 5 von dem Kegelwinkel der Innenkegelfläche 4a des Kolbens 4 und dessen Axiallänge abhängig ist. Bevorzugt ist hierbei der Innenkegelwinkel auf ca. 30° zur Spindelachse ausgelegt. Wie ersichtlich, werden durch den Axialhub des Kolbens 4 die Rückstellfedern 10 für den Kolben bzw. für die Greiferträger zusammengedrückt, so daß nach Druckabbau diese Federn 10 den Kolben 4 und die Greiferträger 5 in die Zwischenstellung der Arbeitsposition zurückführen.

Um von der Arbeitsposition (Fig. 2) in die Park- bzw. Magazinposition (Fig. 1) zurück zu gelangen, wird der Kolben 4 mit Fluid beaufschlagt und anschließend in Rotation, z. B. 300 U/min, versetzt. Aufgrund der Rotation und der damit erzeugten Zentrifugalkraft wird der Arretierstift X gegen die Federkraft der anliegenden Feder Z nach außen gedrückt. Bei nachfolgender Abführung des Fluids wird dann der Kolben 4 mit Hilfe der Federn 10 in die Ausgangsstellung zurückgeschoben und somit die Greiferträger 5 in die Parkposition gemäß Fig. 1 zusammengeklappt. Ein Werkzeug kann auch über mehrere Arretierstifte, die vorzugsweise radial angeordnet sind, verfügen. Zur Lagerung ist die Feder Z vorzugsweise in Bohrungen oder Aussparungen des Arretierstiftes X und des Verschlußelementes Y gelagert. Der Arretierstift X kann zumindest teilweise aus Blei oder einem anderen Element mit großer Dichte hergestellt sein. Er kann vorzugsweise am Ende der von der Werkzeugrotationsachse abgewendeten Seite abgestuft sein. Die Eingriffsflächen zwischen Arretierstift X und Bolzenfortsatz 4b sind vorzugsweise rechtwinklig zueinander angeordnet, damit Federkräfte keinen Einfluß auf den Rückzug des Arretierstiftes X nehmen. Zur Unterstützung dieser Entriegelung könnten die Berührungsflächen auch winkelig zueinander angeordnet sein. Das Halten der Greiferträger 5 in Arbeitsposition (als definierte Zwischenstellung gemäß Fig. 2) ist somit wesentlich, damit das Handhabungswerkzeug 1 über dem Werkstück positioniert werden kann und erst bei Druckbeaufschlagung des Kolbens 4 zugreift.

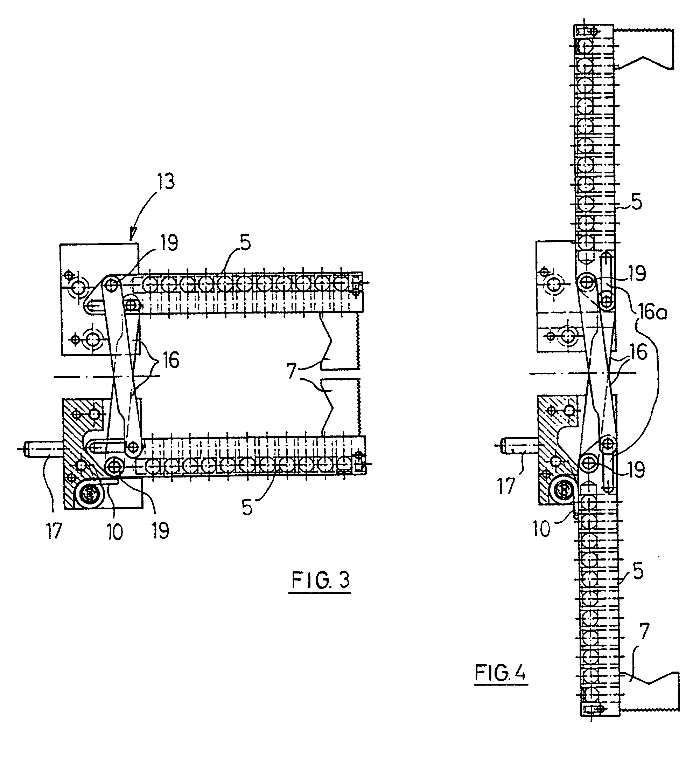

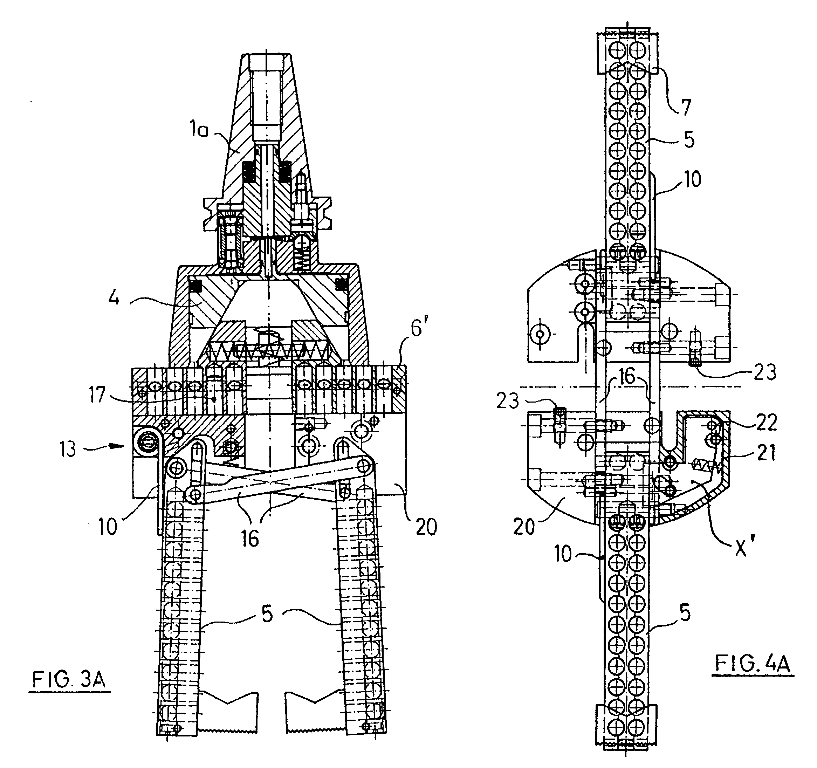

In Fig. 3 und 4 ist eine abgewandelte Ausführungsform des in den Figuren 1 und 2 beschriebenen Greifers bzw. Handhabungswerkzeuges 1 dargestellt, wobei für gleiche Bauteile jeweils die gleichen Bezugsziffern bzw. für ähnliche Elemente die vorangestellte Ziffer "1" verwendet werden. Eine Modifikation liegt hierbei im wesentlichen darin, daß an das die Greiferträger 5 lagernde Gehäuse 3 gemäß Fig. 1 und 2 zusätzlich ein Aufsatzmodul 13 angefügt ist, insbesondere mit Zapfen 17 auf die Backen 6' aufgesteckt ist (vgl. Fig. 3A). Diese modulartige Bauweise hat den Vorteil, daß je nach Greifaufgabe verschiedene Aufsatzmodule 13 an den Spannbacken 6 bzw. 6' gemäß Fig. 1 und 2 angefügt werden können. Ebenso können in Abwandlung der Greiferträger 5 verschiedene Greifer je nach Verwendungszweck (z. B. Innen- oder Außenspannen) über das Aufsatzmodul 13 angekoppelt werden. An diesem sind die Greiferträger 5 an Schwenkachsen 19 gelagert und über ein Koppelgestänge 16 verbunden, das in Langloch-Führungen 16a eingreift. Obwohl hier grundsätzlich ein Zweibacken-Greifer dargestellt ist, kann durch entsprechende Teilung um 120° oder um 90° auch ein Drei- oder Vierbackengreifer gebildet werden, da dies durch die Innenkegelfläche 4a im Kolben 4 ohne weiteres ergänzbar ist.

Die Position der Lagerachsen 19 und der Langlochführungen 16a in den Greiferträgern 5 ist in Abhängigkeit mit dem Koppelgestänge 16 so positioniert, daß sich in Parkposition ( Fig. 3) und der definierten Arbeitsposition ( Fig. 4) des Koppelgestänges 16 eine Verriegelung und damit formschlüssige Stellungsdefinition ergibt, die die Greiferträger 5 mit eingesetzten Greifern 7 zusätzlich zur Federkraft 10 in Arbeitsposition hält. Die Positionierung ist zudem so gewählt, daß bei Druckbeaufschlagung des Kolbens 4 (vgl. Fig. 1, 2 und 3A) und der damit verbundenen Bewegung der Greiferträger 5 und damit auch des Greifaufsatzes 13 eine Spreiz- bzw. Aufklappbewegung der Greiferträger 5 entgegen der Federkraft 10 hervorgerufen wird. Bei Erreichen dieser Arbeitsposition, also vollkommen gestreckter Greiferträger 5, rasten im Aufsatz 13 bzw. dessen Lagerteil 20 an Achsen 22 schwenkbar gelagerte Arretierelemente X' mit ihren Spitzen in die Langlochführungen 16a der Greiferträger 5 ein. Diese Arretierung bildet somit eine stellungsdefinierte Verriegelung oder Fixierung der Arbeitsposition durch Eingreifen in die Langlochführungen 16a des Koppelgestänges 16. Diese von Federn 22 befederten Arretierelemente X' halten somit die Greiferträger 5 in Arbeitsposition gemäß Fig. 4, in die sie durch eine erste Beaufschlagung mit dem Druckmedium gebracht wurden, damit die Greiferelemente 7 über dem Werkstück positioniert werden können und bei nachfolgender Druckbeaufschlagung zugreifen bzw. bei Druckabschaltung lösen können und vom Werkstück abheben.

Um die Greiferträger 5 in die Parkposition ( gemäß Fig. 3 bzw. 3A) zurückzubewegen, ist es notwendig, das Werkzeug 1 in Rotation zu versetzen, damit die in den Langlochführungen 16a eingreifenden Arretierelemente X' entgegen der Feder 21 mit Hilfe der Fliehkraft ausgekoppelt werden. Damit die Fliehkraft und somit die Rotationsgeschwindigkeit möglichst gering gehalten werden kann, werden zum Lösen der Arretierung die durch das Eigengewicht und die Feder 21 belasteten Elemente X' durch Druckbeaufschlagung entlastet. An der Innenseite des Greiferaufsatzes 13 befindliche Anschläge 23 (z.B. Schrauben) dienen dazu, für die jeweiligen Greiferträger 5 bei Druckbeaufschlagung die Position einzustellen, bei der die Arretierelemente X' entlastet sind.

Das Zurückführen der Greiferträger 5 in die Magazinstellung bzw. Parkposition geht bei dieser Ausführung wie folgt vonstatten. Das Handhabungswerkzeug 1 wird mit Fluiddruck beaufschlagt und zieht dadurch die Greiferträger 5 zusammen, soweit dies die Anschlagschrauben 23 im Greiferaufsatz 13 erlauben, um die Arretierelemente X' zu entlasten. Anschließend wird das Werkzeug 1 in Rotation, z. B. 300 U/min, versetzt, wodurch die Arretierelemente X' um die Achsen 22 zurückgeschwenkt werden. Die nachfolgende Abschaltung des Fluidzustromes bewirkt dann mit dem Zurückweichen des Kolbens 4 und dem durch Fliehkraft bewirkten Auseinanderlaufen der somit entriegelten Greiferträger 5 im Handhabungswerkzeug 1 das Zusammenklappen der Greiferträger 5 des Greifaufsatzes 13. Anschließend wird das Werkzeug zum Stillstand gebracht und im Magazin abgelegt. Umgekehrt ist zum Aufklappen der Greiferträger 5 mit Verriegelung durch die eingreifenden Arretierelemente X' in die Arbeitsposition die Druckbeaufschlagung mit dem Medium, z.B. Druckluft, ausreichend.

## Patentansprüche

1. Handhabungswerkzeug für eine Werkzeugmaschine, insbesondere für eine NC-Fräsmaschine oder ein Bearbeitungszentrum, mit einem Werkzeugspeicher, aus dem das mit Greifelementen (7) versehene Handhabungswerkzeug (1) aus einer Magazinstellung in eine Bearbeitungsspindel der Werkzeugmaschine zum Aufnehmen, Halten und/oder Ausrichten eines Werkstückes einsetzbar ist, wobei die Greifelemente (7) mit deren Greiferträgern (5) in Radial- und/oder Axialrichtung von der Magazinstellung über eine aufgespreizte, stellungsdefinierte Zwischenposition in eine Greifposition über je eine Asche (9, 19) spreizbar am Handhabungswerkzeug (1) angeordnet sind, **dadurch gekennzeichnet, daß** die mit einem Betätigungselement (4) zusammenwirkenden Greiferträger (5) durch je eine langloch förmige Kurvenführung (6a, 16a) zur Führung der Greifer träger (5) in Axial -und Radialrichtung gelagert sind.

2. Handhabungswerkzeug nach Anspruch 1, **dadurch gekennzeichnet, daß** ein Arretierelement (X, X') als Anschlag für die Zwischenposition, insbesondere die Arbeitsposition, ausgebildet ist.

3. Handhabungswerkzeug nach Anspruch 1 und 2, **dadurch gekennzeichnet, daß** der Kolben (4) einen Fortsatz (4b) aufweist, der in Zwischenposition mit dem Arretierelement (X) zusammenwirkt.

4. Handhabungswerkzeug nach Anspruch 1, **dadurch gekennzeichnet, daß** die spreizbaren Greiferträger (5) mittels eines Spreizgestänges (16) und einem Lagerteil (20) zu einem Aufsatzmodul (13) verbunden sind.

5. Handhabungswerkzeug nach einem der Ansprüche 1 bis 4, **dadurch gekennzeichnet, daß** die spreizbaren Greiferträger (5) von Federn (10), vorzugsweise Schenkelfedern, zur Zwischenposition hin beaufschlagt sind.

6. Handhabungswerkzeug nach Anspruch 1, **dadurch gekennzeichnet, daß** zumindest zwei Greiferträger (5) axial fest und radial drehbar an dem Handhabungswerkzeug (1) befestigt sind.

7. Handhabungswerkzeug nach Anspruch 6, **dadurch gekennzeichnet, daß** zur Positionierung der Greiferträger (5) in Zwischenposition magnetische Anschläge vorgesehen sind.

## Claims

1. A handling tool for a machine tool, in particular for a numerically controlled shaping machine or a processing center, comprising a tool store, out of which the handling tool (1) provided with gripping tools (7) can be inserted from a magazine arrangement into a working mandrel of the machine tool to pick up, retain and/or align a workpiece, wherein the gripping elements (7) with their gripper beams (5) are disposed on the handling tool (1) so as to be spread via one axis (9, 19) each in a radial and/or axial direction from the magazine arrangement through an expanded, predetermined intermediate position to a grip position,
**characterized in that**
the gripper beams (5) cooperating with an actuator (4) are each supported by a slotted curve guide (6a, 16a) to guide said gripper beams (5) in the axial and radial directions.

2. The handling tool of claim 1, **characterized in that** a blocking element (X, X') is formed in the shape of a stop for the intermediate position, in particular the working position.

3. The handling tool of claims 1 and 2, **characterized in that** the piston (4) includes an extension (4b) which, in an intermediate position, cooperates with the blocking element (X).

4. The handling tool of claim 1, **characterized in that** the spreadable gripper beams (5) are combined by means of a spreader linkage (16) and a bearing portion (20) to form a setup module (13).

5. The handling tool of any of claims 1 to 4, **characterized in that** the spreadable gripper beams (5) are biased toward the intermediate position by springs (10), preferably leg springs.

6. The handling tool of claim 1, **characterized in that** at least two gripper beams (5) are fastened to the handling tool (1) in an axially stable and radially pivotable manner.

7. The handling tool of claim 6, **characterized in that** magnetic stops are provided to place the gripper beams (5) in the intermediate position.

## Revendications

1. Outil de maniement pour une machine-outil, en particulier pour une fraiseuse à commande numérique ou un centre d'usinage, avec un magasin à outils, à partir duquel l'outil de maniement (1) muni d'éléments de prise (7) peut être inséré à partir d'une position de magasin dans une broche d'usinage de la machine-outil afin de recevoir, tenir et/ou ajuster une pièce à usiner, les éléments de prise (7) étant disposés avec leurs supports de pinces ou supports de griffe (5) de façon à pouvoir être écartés ou déployés chacun par l'intermédiaire d'un axe (9, 19) sur l'outil de maniement (1) en direction radiale et/ou axiale, en partant du magasin et en passant par une position intermédiaire déployée prédéterminée pour aboutir à une position de prise, **caractérisé en ce que** les supports de pinces (5) qui agissent conjointement avec un élément d'actionnement (4) sont logés chacun au travers d'un guide courbe (6a, 16a) formant un trou oblong afin de guider les supports de pinces (5) en direction axiale et radiale.

2. Outil de maniement selon la revendication 1, **caractérisé en ce qu'**un élément d'arrêt (X, X') est formé comme butoir pour la position intermédiaire, en particulier la position de travail.

3. Outil de maniement selon les revendications 1 et 2, **caractérisé en ce que** le piston (4) comporte un prolongement (4b) qui agit conjointement avec l'élément d'arrêt (X) en position intermédiaire.

4. Outil de maniement selon la revendication 1, **caractérisé en ce que** les supports de pinces (5) déployables sont reliés à un module de couronnement (13) au moyen d'une tringlerie de déploiement (16) et d'un élément d'appui (20).

5. Outil de maniement selon l'une quelconque des revendications 1 à 4, **caractérisé en ce que** les supports de pinces déployables (5) sont amenés vers la position intermédiaire par des ressorts (10), de préférence des ressorts à branches.

6. Outil de maniement selon la revendication 1, **caractérisé en ce qu'**au moins deux supports de pinces (5) sont fixés solidement en direction axiale et de manière rotative en direction radiale sur l'outil de maniement (1).

7. Outil de maniement selon la revendication 6, **caractérisé en ce que** des butoirs magnétiques sont prévus pour le positionnement des supports de pinces (5) en position intermédiaire.
